# EUROPÄISCHE PATENTSCHRIFT

(11) **EP 3 175 128 B1**
(45) Veröffentlichungstag und Bekanntmachung des Hinweises auf die Patenterteilung: **29.08.2018**
(21) Anmeldenummer: 15735632.0
(22) Anmeldetag: 09.07.2015
(51) Int. Cl.: F16B 13/06, F16B 13/12

(54) **SPREIZDÜBEL**
EXPANSION DOWEL
CHEVILLE À EXPANSION

(30) Priorität: 29.07.2014 DE 102014110734
(43) Veröffentlichungstag der Anmeldung: 07.06.2017
(73) Patentinhaber: fischerwerke GmbH & Co. KG, 72178 Waldachtal (DE)
(72) Erfinder: NEHL, Wolfgang, 72178 Waldachtal (DE)
(86) Internationale Anmeldenummer: PCT/EP2015/001406
(87) Internationale Veröffentlichungsnummer: WO 2016/015823

(56) Entgegenhaltungen:
- EP-A2- 2 108 851
- WO-A1-02/066845
- DE-A1- 19 849 821
- DE-A1-102011 000 537

## Beschreibung

Die Erfindung betrifft einen Spreizdübel mit den Merkmalen des Oberbegriffs des Anspruchs 1.

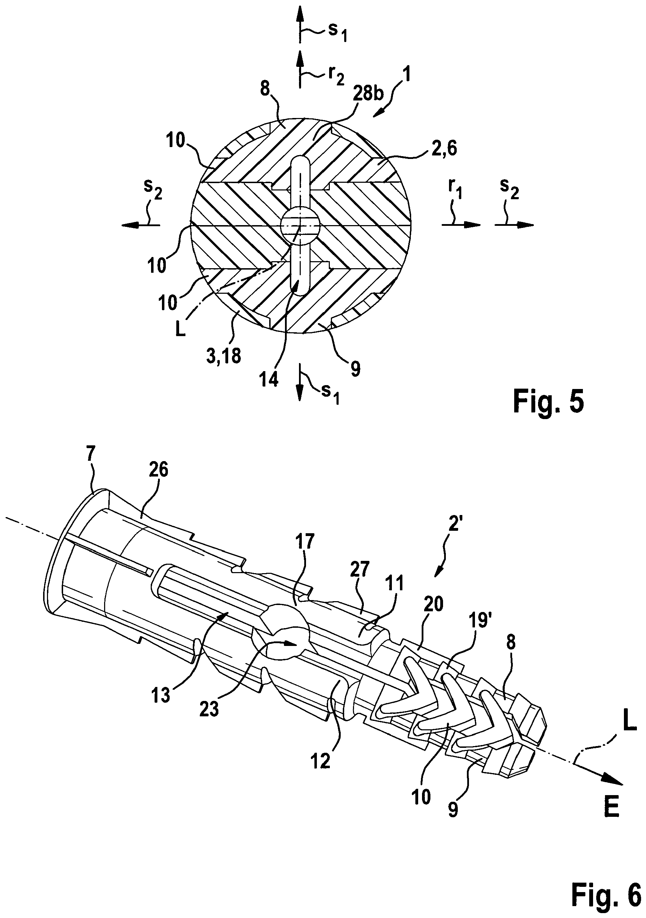

Aus den Figuren 5 bis 8 der Offenlegungsschrift DE 10 2011 000 537 A1 ist ein gattungsgemäßer Spreizdübel bekannt, der aus mehreren unterschiedlichen Kunststoffen besteht und der in einem Mehrkomponentenspritzgussverfahren hergestellt wird. Der Spreizdübel dient zur Befestigung von Gegenständen an einem Verankerungsgrund und kann hierzu in ein in dem Verankerungsgrund hergestelltes Bohrloch eingeführt und mit einem Spreizelement verspreizt werden. Der Spreizdübel weist den in Figur 6 der Offenlegungsschrift dargestellten innenliegenden Grundkörper aus einem ersten Kunststoff auf. Der Grundkörper erstreckt sich in Längsrichtung entlang einer Längsachse und besteht aus einer rohrartigen Einführhülse, durch die eine Schraube als Spreizelement in einen innenliegenden und sich in Längsrichtung erstreckenden Spreizkanal eingeführt werden kann. Der Spreizkanal erstreckt sich in einen sich in Einbringrichtung des Dübels an die Einführhülse anschließenden Spreizbereich, der vier durch zwei sich kreuzende Schlitze voneinander getrennte Spreizzungen aufweist, die aus dem ersten Kunststoff hergestellt sind. An den Spreizbereich schließt sich eine Hülse an, die aus zwei Hülsenteilen besteht, die durch V-förmige, elastische und in Umfangsrichtung aufweitbare Verbinder miteinander verbunden sind. Der Grundkörper ist mit einer Hülle aus einem zweiten Kunststoff zumindest teilweise umspritzt. Die Hülle bildet im Spreizbereich in Längsrichtung gestreckte und parallel zu den Spreizzungen verlaufende Spreizstege aus, die an ihren vorderen und hinteren Enden durch ringförmige Elemente in Umfangsrichtung miteinander verbunden sind. Die ringförmigen Elemente sind wie die Spreizstege Teile der Hülle und aus dem zweiten Kunststoff einstückig mit den Spreizstegen hergestellt. Beim Aufspreizen des Spreizdübels lösen sich die Spreizstege im Spreizbereich von den Spreizzungen des Grundkörpers und werden wie die Spreizzungen radial nach außen bewegt.

Aufgabe der Erfindung ist, einen Spreizdübel vorzuschlagen, der in seinem Aufspreizverhalten verbessert ist.

Diese Aufgabe wird erfindungsgemäß durch einen Spreizdübel mit den Merkmalen des Anspruchs 1 gelöst. Der erfindungsgemäße Spreizdübel, der aus mindestens zwei unterschiedlichen Kunststoffen besteht, umfasst einen Grundkörper aus einem ersten Kunststoff und eine Hülle aus einem zweiten Kunststoff, die den Grundkörper zumindest teilweise umhüllt. Mit "unterschiedlichen Kunststoffen" sind Kunststoffe gemeint, die sich beispielsweise hinsichtlich ihrer Festigkeit, ihres Elastizitätsmoduls, ihrer chemischen Zusammensetzung, ihres Faseranteils und/oder ihrer Farbe voneinander unterscheiden. Der Grundkörper weist einen Spreizbereich auf, der sich in Längsrichtung entlang einer Längsachse erstreckt und mindestens zwei Spreizzungen umfasst, die durch einen ersten Schlitz voneinander getrennt sind. Die Länge des Schlitzes definiert somit die Länge des Spreizbereichs. Durch die Ausbildung des ersten Schlitzes sind die beiden Spreizzungen, insbesondere durch das Einbringen eines Spreizelements zwischen die Spreizzungen, in radialer Richtung voneinander weg bewegbar und aufspreizbar. Insbesondere sind die beiden Spreizzungen durch den ersten Schlitz vollständig voneinander getrennt, sie können aber auch durch eine dünne Spritzhaut oder durch elastische Elemente, die aus dem ersten Kunststoff bestehen, miteinander verbunden sein, die aber ein Aufspreizen der Spreizzungen im Wesentlichen nicht behindern, sondern zur Führung des Spreizelements dienen. Insbesondere ist zwischen den Spreizzungen ein Spreizkanal zur Aufnahme des Spreizelements ausgebildet. Bei dem Spreizelement handelt es sich insbesondere um eine Schraube. Der Spreizdübel weist zudem eine in Einbringrichtung vorn angeordnete Hülse auf, die mit dem Spreizbereich verbunden ist und die zumindest teilweise durch einen von der Hülle gebildeten Hüllkörper aus dem zweiten Kunststoff umhüllt ist. Der Hüllkörper ist der Teil der Hülle, der im Bereich der Hülse angeordnet ist.

Erfindungsgemäß ist an dem Hüllkörper mindestens ein Flügelelement angeordnet, das sich vom Hüllkörper ausgehend entgegen der Einbringrichtung und im Wesentlichen in Längsrichtung kragarmförmig erstreckt. "Kragarmförmig" meint, dass das Flügelelement derart gestaltet ist, dass das in Einbringrichtung vordere Ende des Flügelelements mit dem Hüllkörper insbesondere einstückig verbunden ist und das hintere Ende des Flügelelements frei und außer mit dem Hüllkörper mit keinem weiteren Teil der Hülle verbunden ist. Insbesondere ist das Flügelelement im Wesentlichen nicht formschlüssig vom Grundkörper gegen eine radiale Bewegung nach außen gehalten. Die "Einbringrichtung" ist die Richtung, in der der Spreizdübel planmäßig in ein Bohrloch eingebracht wird. Das Flügelelement ist insbesondere ebenfalls aus dem zweiten Kunststoff hergestellt, so dass es als Hüllelement einen im Spreizbereich liegenden Teil der Hülle bildet. Das kragarmförmige Flügelelement hat den Vorteil, dass sein hinterer Teil beim Einbringen des Spreizelements relativ leicht, das heißt schon bei einer kleinen radial wirkenden Spreizkraft, nach außen verschoben und gegen eine Bohrlochwand gedrückt werden kann.

Vorzugsweise sind an dem Hüllkörper mehrere Flügelelemente angeordnet, die an ihren hinteren Enden nicht miteinander verbunden sind, um ein Aufspreizen der Flügelelemente schon bei einer kleinen Spreizkraft zu ermöglichen. Vorzugsweise sind die Flügelelemente ausschließlich durch den die Hülse zumindest teilweise umhüllenden Hüllkörper miteinander verbunden, so dass im Spreizbereich keine Verbindung zwischen den Flügelelementen besteht. Dadurch ist gewährleistet, dass die Flügelelemente mit einer kleinen Spreizkraft aufspreizbar sind.

Weiterhin ist bevorzugt, dass mindestens ein Flügelelement in einer im Spreizbereich angeordneten Öffnung einliegt. Insbesondere ist die Öffnung durch den ersten Schlitz gebildet oder umfasst den ersten Schlitz, der die beiden Spreizzungen voneinander trennt. Das Flügelelement beansprucht somit keinen oder nur wenig zusätzlichen Platz im Spreizbereich, wofür die Spreizzungen geschwächt werden müssten.

Vorzugsweise erstreckt sich mindestens ein Flügelelement über mindestens die gesamte Länge des Spreizbereichs, so dass aufgrund des langen Hebelarms auch dann eine kleine Spreizkraft zum Aufspreizen ausreichend ist, wenn das Flügelelement mit dem Hüllkörper steif und biegefest verbunden ist.

Vorzugsweise ist der erfindungsgemäße Spreizdübel derart gestaltet, dass genau zwei Flügelelemente zwischen genau zwei Spreizzungen angeordnet sind. Ein derart gestalteter Spreizdübel ist einfach im Aufbau, da er aus nur wenigen, großen und einfach gestalteten Elementen besteht.

In einer bevorzugten Ausgestaltungsform des erfindungsgemäßen Spreizdübels ist mindestens ein Flügelelement insbesondere radial innen an seinem hinteren Ende abgeschrägt, und zwar insbesondere schräg gegenüber der Längsachse des Spreizdübels. Insbesondere dann, wenn sich das Flügelelement radial bis zu einem Spreizkanal in den ersten Schlitz hinein erstreckt, hat diese Ausgestaltungsform den Vorteil, dass das Flügelelement das Einführen eines Spreizelements in den Spreizkanal nicht behindert.

Weiterhin ist bevorzugt, dass mindestens ein Flügelelement in einem unverspreizten Zustand in radialer Richtung im Spreizbereich über den Grundkörper übersteht. Insbesondere steht das hintere Ende des Flügelelements über den Grundkörper über. Mit "Überstehen" ist hier gemeint, dass das Flügelelement zumindest lokal begrenzt nicht radial bündig mit dem Spreizbereich abschließt, sondern eine radiale Erhöhung bildet. Das Flügelelement kann somit schon im unverspreizten Zustand mit der Wand eines Bohrlochs in Kontakt kommen und als Verdrehsicherungselement wirken, das verhindert, dass der Spreizdübel beim Einschrauben einer Schraube als Spreizelement mit der Schraube mitdreht.

Vorzugsweise ist in der Hülse ein zweiter Schlitz angeordnet. Der zweite Schlitz ist gegenüber dem ersten Schlitz geneigt. Das bedeutet, dass eine Ebene, in der der erste Schlitz liegt, eine Ebene, in der der zweite Schlitz liegt, unter einem Winkel schneidet. Insbesondere sind die beiden Schlitze, bzw. die beiden Ebenen, in denen die Schlitze liegen, orthogonal zueinander.

Vorzugsweise wird der Spreizbereich eines erfindungsgemäßen Spreizdübels beim Einbringen eines Spreizelements im Wesentlichen in eine erste radiale Spreizrichtung aufgespreizt, während die Hülse in eine davon abweichende zweite radiale Spreizrichtung aufspreizt. Mit "im Wesentlichen" ist hier gemeint, dass sich der Spreizbereich bzw. die Hülse beim Einbringen des Spreizelements in eine bevorzugte Spreizrichtung stärker weitet als in andere Richtungen. Dies schließt aber nicht aus, dass sich der Spreizbereich und/oder die Hülse auch in andere Richtungen oder insgesamt im Umfang weitet. Insbesondere ist der erste Schlitz hierfür derart ausgestaltet, dass er sich nicht bis in die Hülse erstreckt. Insbesondere sind die beiden radialen Spreizrichtungen des Spreizbereichs und der Hülse im Wesentlichen orthogonal zueinander, wobei "im Wesentlichen" hier bedeutet, dass eine Abweichung von +/-10° möglich ist.

Ein Spreizdübel mit Bereichen unterschiedlicher Spreizrichtungen hat den Vorteil, dass der Dübel nicht nur eine bevorzugte Spreizrichtung aufweist, sondern mindestens zwei Spreizrichtungen. Die beim Aufspreizen des Spreizbereichs und der Hülse entstehende Spreizkräfte werden somit in unterschiedliche radiale Richtungen in den Verankerungsgrund eingeleitet und verteilt, wodurch größere Kräfte vom Spreizdübel in den Verankerungsgrund eingeleitet werden können.

Die Erfindung wird nachfolgend anhand von zwei Ausführungsbeispielen näher erläutert.

Es zeigen:
- Figur 1: einen ersten erfindungsgemäßen Spreizdübel in einer Seitenansicht;
- Figur 2: den Grundkörper des ersten Spreizdübels in einer perspektivischen Seitenansicht;
- Figur 3: einen Axialschnitt entlang der Achse III-III durch den ersten Spreizdübel;
- Figur 4: einen Schnitt durch den ersten Spreizdübel entlang der Achse IV-IV;
- Figur 5: einen Schnitt durch den ersten Spreizdübel entlang der Achse V-V; und
- Figur 6: den Grundkörper eines zweiten erfindungsgemäßen Spreizdübels in einer perspektivischen Seitenansicht.

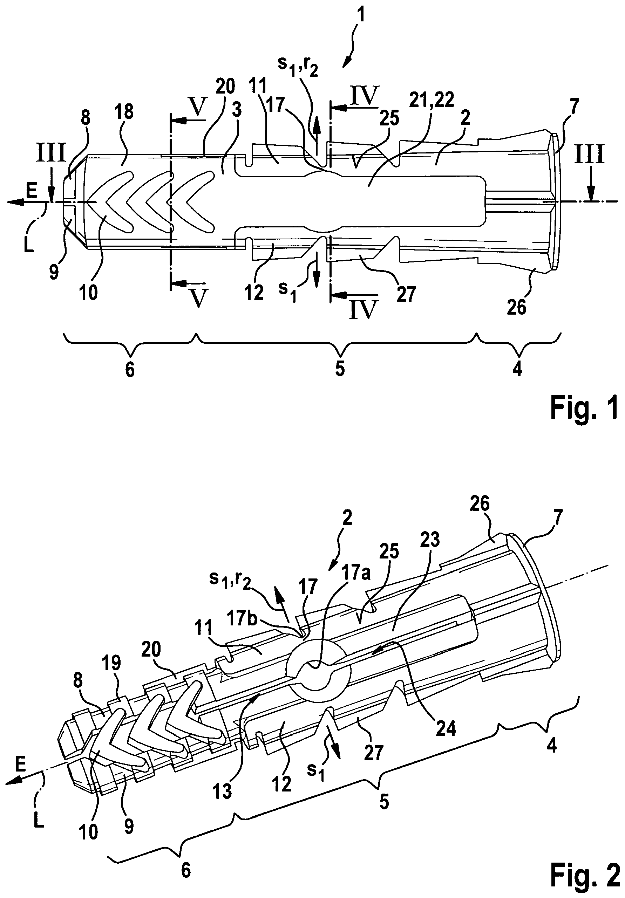

In den Figuren 1 bis 5 ist ein erster erfindungsgemäßer Spreizdübel 1 dargestellt, der zur Befestigung eines Gegenstands (nicht dargestellt) in ein Bohrloch (nicht dargestellt) eingebracht und mit einem Spreizelement, insbesondere einer Schraube (nicht dargestellt), verspreizt werden kann. Der Spreizdübel 1 besteht aus einem Grundkörper 2 aus einem ersten Kunststoff und einer Hülle 3 aus einem zweiten, sich vom ersten Kunststoff unterscheidenden Kunststoff. Der erste Kunststoff ist im Ausführungsbeispiel ein Polyamid, während der zweite Kunststoff ein Polypropylen ist. Der Grundkörper 2 ist ohne die Hülle 3 in Figur 2 dargestellt und besteht aus einer Einführhülse 4, die in Einbringrichtung E hinten am Grundkörper 2 angeordnet ist, einem sich an die Einführhülse 4 in Einbringrichtung E anschließenden Spreizbereich 5 und eine am Grundkörper 2 vorn angeordnete Hülse 6. Die Einbringrichtung E ist die Richtung, in die der Spreizdübel 1 planmäßig in ein Bohrloch eingebracht wird. Die Einführhülse 4, durch die ein Spreizelement in den Spreizdübel 1 planmäßig eingeführt werden kann, ist im Ausführungsbeispiel als kurzer Hohlzylinder ausgebildet, der sich entlang der Längsachse L erstreckt und an dessen Außenseite vier hintere Verdrehsicherungsrippen 26 angeordnet sind. Am hinteren Ende der Einführhülse 4 ist ein umlaufendender Bund 7 angeordnet, der das hintere Ende des Grundkörpers 2 und des Spreizdübels 1 bildet und verhindert, dass der Spreizdübel 1 zu tief in ein Bohrloch eingebracht werden kann. Die vorn am Grundkörper 2 angeordnete Hülse 6 besteht aus zwei halbschalenförmigen Hülsenteilen 8, 9 die durch drei V-förmige elastische Verbinder 10 miteinander verbunden sind, so dass die Hülse 6 beim Einbringen eines Spreizelements in radialer Richtung aufweitbar ist, wobei sich die Verbinder 10 in radialer Richtung dehnen. Zwischen der Hülse 6 und der Einführhülse 4 erstreckt sich der Spreizbereich 5 entlang der Längsachse L.

Der Spreizbereich 5 weist zwei Spreizzungen 11, 12 auf, die durch einen ersten Schlitz 13 gebildet werden, der sich in Längsrichtung des Spreizdübels 1 und in eine erste radiale Richtung r₁ erstreckt und den Grundkörper 2 im Spreizbereich 5 vollständig durchdringt. In den Figuren 1 und 2 verläuft die erste radiale Richtung r₁ senkrecht zur Bildebene. Die axiale Länge des ersten Schlitzes 13 definiert die axiale Länge der Spreizzungen 11, 12 und somit die Länge des Spreizbereichs 5. Dadurch, dass die beiden Spreizzungen 11, 12 durch den ersten Schlitz 13 vollständig voneinander getrennt sind, können die Spreizzungen 11, 12 beim Einbringen eines Spreizelements voneinander weg bewegt und in eine erste Spreizrichtung s₁ aufgespreizt werden. Die erste Spreizrichtung s₁ ist orthogonal zu einer Ebene, in der der erste Schlitz 13 liegt. Damit die Spreizzungen 11, 12 schon durch eine kleine, beim Einführen eines Spreizelements in den Spreizbereich 5 entstehende und in die erste Spreizrichtung s₁ wirkende Spreizkraft aufgespreizt werden können, weisen die Spreizzungen 11, 12 lokale Schwächungen 17 auf, die als Sollknickstellen wirken. Die Schwächungen 17 sind im Spreizbereich 5 ungefähr in Längsrichtung mittig an den Spreizzungen 11, 12 zwischen der Hülse 6 und der Einführhülse 4 angeordnet und bestehen jeweils aus zwei Teilen: Jeweils einem in radialer Richtung innen an den Spreizzungen 11, 12 angeordneten inneren Teil 17a, der als konisch abgeschrägte, kreissegmentförmige Höhlung ausgeführt ist, und jeweils einem in radialer Richtung außen an den Spreizzungen 11, 12 angeordneten äußeren Teil 17b, der schlitz- bzw. keilförmig ausgestaltet ist. Beim Aufspreizen knicken die beiden Spreizzungen 11, 12 an den Schwächungen 17 aus und werden in die erste Spreizrichtung s₁ voneinander weg und orthogonal zur ersten radialen Richtung r₁ bzw. zu einer Ebene bewegt, in der der erste Schlitz 13 liegt.

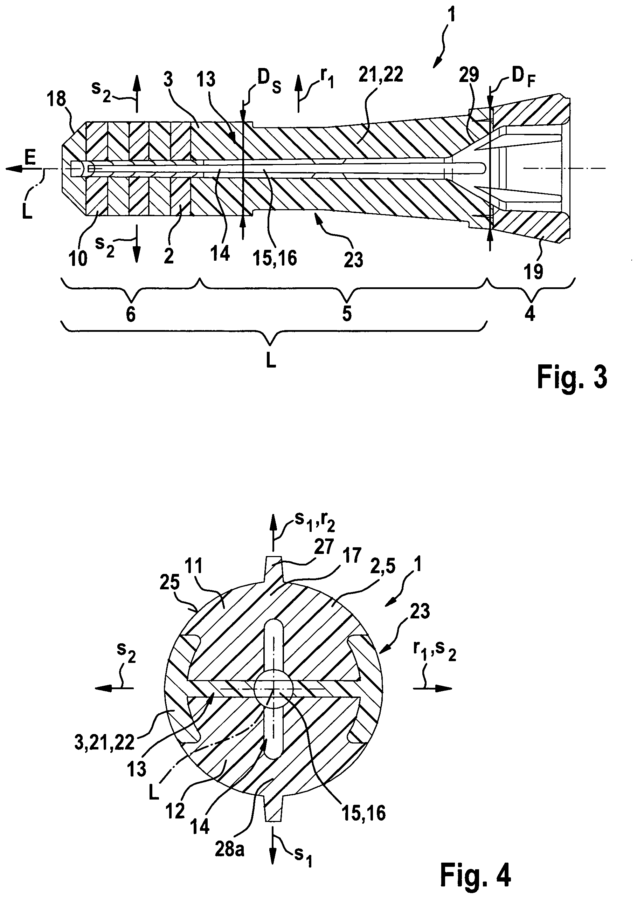

Wie in den Figuren 3 und 4 dargestellt, bildet der erste Schlitz 13 mit einem zweiten Schlitz 14 im Spreizbereich 5 einen Spreizkanal 15 zur Aufnahme eines Spreizelements (nicht dargestellt). Der zweite Schlitz 14 erstreckt sich in Längsrichtung des Spreizdübels 1 und in eine zweite radiale Richtung r₂, die orthogonal zur ersten radialen Richtung r₁ und parallel zur ersten Spreizrichtung s₁ ist. Der Spreizkanal 15 ist aufgrund der beiden sich kreuzenden und zueinander geneigten Schlitze 13, 14 kreuzförmig und weist in dem Bereich, in dem sich die beiden Schlitze 13, 14 schneiden, einen zentrischen Schraubkanal 16 mit Kreisquerschnitt auf. Der Schraubkanal 16 dient zur Führung einer als Spreizelement in den Spreizkanal 15 eingeschraubten Schraube (nicht dargestellt) und erstreckt sich bis in die Hülse 6. Der zweite Schlitz 14 erstreckt sich in die zweite radiale Richtung r₂ nur soweit, dass er den Grundkörper 2 im Spreizbereich 5 nicht durchdringt. Der zweite Schlitz 14 schwächt die Spreizzungen 11, 12 lokal, so dass an den Spreizzungen 11, 12 eine Art Scharnier 28a ausgebildet ist, das parallel zur Längsachse L verläuft und bewirkt, dass sich die Spreizzungen 11, 12, die einen nahezu halbkreisförmigen Querschnitt aufweisen, sich an eine unebene Bohrlochwand (nicht dargestellt) anpassen können.

Während der erste Schlitz 13 ausschließlich im Spreizbereich 5 angeordnet ist und sich nicht bis in die Hülse 6 erstreckt, und somit die Länge des Spreizbereichs 5 definiert, erstreckt sich der zweite Schlitz 14 bis in die Hülse 6 und verläuft, wie der Schraubkanal 16, nahezu bis zum vorderen Ende des Spreizdübels 1, wie dies in Figur 3 zu sehen ist. Der zweite Schlitz 14 durchdringt auch die beiden Hülsenteile 8, 9 in radialer Richtung nicht, wodurch auch in den beiden Hülsenteile 8, 9 Scharniere 28b entstehen, derart, dass auch die beiden Hülsenteile 8, 9 entlang einer parallel zur Längsachse L verlaufenden Achse in sich verformt werden können. Zudem durchtrennt der zweite Schlitz 14 die Hülse 6 im Inneren der Hülse 6, wodurch der zweite Schlitz 14 eine orthogonal zum Schlitz 14 verlaufende zweite Spreizrichtung s₂ definiert, in die die Hülse 6 beim Einbringen eines Spreizelements im Wesentlichen aufgespreizt wird. Die Hülse 6 wird sich aufgrund der elastischen Verbinder 10 zwar auch in die zweite radiale Richtung r₂ weiten, allerdings nicht in dem Maß, wie dies aufgrund des zweiten Schlitzes 14 in die zweiten Spreizrichtungen s₂ möglich ist. Da die Schlitze 13, 14 orthogonal zueinander stehen, spreizt der Spreizbereich 5 beim Einbringen eines Spreizelements im Wesentlichen in die erste radiale Spreizrichtung s₁ auf, während die Hülse 6 im Wesentlichen in die davon abweichende zweite radiale Spreizrichtung s₂ aufspreizt, die orthogonal zur ersten Spreizrichtung s₁ ist.

Die Hülse 6 ist durch einen Hüllkörper 18 der Hülle 3 teilweise umhüllt. Um zu verhindern, dass die Hülle 3 beim Aufspreizen des Spreizdübels 1 relativ zur Hülse 6 verschoben wird, sind außen an der Hülse 6 des Grundkörpers 2 Rippen 19 und längliche Blöcke 20 angeordnet. Jeweils vier Rippen 19 sind an jedem der beiden Hülsenteile 8, 9 als in Umfangsrichtung verlaufende, in Längsrichtung voneinander beabstandete und radial nach außen stehende Teile eines Kreisrings ausgebildet, die vom Hüllkörper 18 umgeben und umschlossen sind, derart, dass die Rippen 19 den Hüllkörper 18 axialfest an der Hülse 6 halten. Die Abstände zwischen benachbarten Rippen 19 entsprechen dabei der axialen Erstreckung der Rippen 19. Die beiden Blöcke 20 sind quaderförmig ausgebildet und verlaufen in Längsrichtung des Spreizdübels 1. Je ein Block 20 ist am hinteren Teil der Hülse 6 angeordnet, wobei sich die Blöcke 20 bis in den Spreizbereich 5 erstrecken. Die Blöcke 20 sind in Umfangsrichtung und in Längsrichtung von der Hülle 3 umgeben, die sie in radialer Richtung durchdringen. Die Blöcke 20 verhindern eine Bewegung des Hüllkörpers 18 auf der Hülse 6 in Umfangsrichtung.

In Figur 6 ist ein alternativer Grundkörper 2' dargestellt, bei dem die Rippen 19' in Einbringrichtung E keilförmig abgeschrägt sind, wodurch eine begrenzte Bewegung des Hüllkörpers 18 auf der Hülse 6 möglich ist. Durch die keilförmige Abschrägung führt eine Bewegung des Hüllkörpers 18 entgegen der Einbringrichtung E zu einer zusätzlichen Aufweitung des Hüllkörpers 18, was die Haltekraft des Spreizdübels 1 in einem Bohrloch verbessert.

An dem Hüllkörper 18 sind zwei Hüllelemente 21 als Flügelelemente 22 angeordnet, die sich vom Hüllkörper 18 ausgehend entgegen der Einbringrichtung E und im Wesentlichen in Längsrichtung L kragarmförmig in den Spreizbereich 5 erstrecken (siehe Figuren 1, 3 und 4). Die beiden Flügelelemente 22 sind auf radial entgegengesetzten Seiten des Spreizbereichs 5 des Spreizdübels 1 angeordnet und außer über den Hüllkörper 18 nicht miteinander verbunden. Die Verbindung mit dem Hüllkörper 18 ist einstückig, steif und biegefest. Die beiden Flügelelemente 22 liegen in Öffnungen 24, die durch nutartige, quaderförmige Ausnehmungen 23, den ersten Schlitz 13 und den inneren Teilen 17a der Schwächungen 17 im Spreizbereich 5 gebildet sind. Die Ausnehmungen 23 verlaufen außen in Längsrichtung des Spreizdübels 1 und sind im Verhältnis zur Größe der Spreizzungen 11, 12 relativ klein und schwächen die Spreizzungen 11, 12 nur unwesentlich. Die beiden Flügelelemente 22 sind somit auch zwischen den zwei Spreizzungen 11, 12 angeordnet und erstrecken sich über die gesamte Länge des Spreizbereichs 5. Die aus dem zweiten Kunststoff hergestellten Flügelelemente 22 füllen den ersten Schlitz 13 von einer Mantelfläche 25 des Spreizdübels 1 bis zum Schraubkanal 16 sowie die Öffnungen 24 und die inneren Teile 17a der Schwächung 17 vollständig aus. Der innenliegende zweite Schlitz 14 ist allerdings nicht mit dem zweiten Kunststoff der Hülle 3 gefüllt. Damit das Einführen eines Spreizelements in den Spreizbereich 5 durch die Flügelelemente 22 nicht behindert wird, sind die Flügelelemente 22 an ihren hinteren, der Einführhülse 4 zugewandten Enden 29 innen gegenüber der Längsachse L des Spreizdübels 1 abgeschrägt. Die Flügelelemente 22 sind kragarmförmig ausgebildet, derart, dass sie bereits bei geringen Spreizkräften aufspreizen, insbesondere schon dann, wenn das Spreizelement nur gegen die hinteren Enden 29 der Flügelelemente 22 drückt. Die Ausbildung der Flügelelemente 22 als Kragarme hat den Vorteil, dass die Spreizkräfte mit einem großen Hebelarm zur Verbindungstelle mit dem Hüllkörper 18 an den hinteren Enden 29 der Flügelelemente 22 wirken, so dass schon eine kleine Spreizkraft ausreicht, um die hinteren Enden 29 der Flügelelemente 22 trotz der biegesteifen Verbindung mit dem Hüllkörper 18 radial nach außen zu drücken. Im unverspreizten Zustand des Spreizdübels 1, also vor dem Einführen eines Spreizelements in den Spreizkanal 15, stehen die Flügelelemente 22 in radialer Richtung über den Grundkörper 2 im Spreizbereich 5 über. Im Schnitt der Figur 3 wird dies deutlich: Der Spreizbereich 5 weist über seine Länge einen konstanten Außendurchmesser D_{S} auf, während sich die beiden Flügelelemente 23 im hinteren Bereich entgegen der Einbringrichtung E keilförmig erweitern, so dass sie im Bereich ihres hinteren Endes 29 einen größeren Durchmesser D_{F} als der Spreizbereich 5 aufweisen. Die Flügelelemente 23 wirken gemeinsam mit den hinteren Verdrehsicherungsrippen 26 und zwei außen auf den Spreizzungen 11, 12 ausgebildeten, sich über die Länge des Spreizbereichs 5 erstreckenden und teilweise unterbrochenen vorderen Verdrehsicherungsrippen 27 gegen ein Mitdrehen des Spreizdübels 1 in einem Bohrloch beim Eindrehen eines Spreizelements in den Spreizkanal 15.

Durch das Verfüllen der Öffnungen 24 im Spreizbereich 5 und von Bereichen zwischen den Hülsenteilen 8, 9 der Hülse 6 mit dem zweiten Kunststoff kann beim Verspreizen des Spreizdübels 1 in einem den Spreizdübel 1 umgebenden Bohrloch relativ viel Material gegen die Wand des Bohrlochs gepresst werden, wobei die Teile des Spreizdübels 1 durch die Verwendung unterschiedlicher Kunststoffe gegeneinander beweglich und zum Aufspreizen leicht verformbar bleiben. Dadurch kann der Spreizdübel 1 sehr kompakt und kurz gestaltet werden, mit einem Verhältnis der Länge L vom vorderen Ende der Hülse 6 bis zum hinteren Ende des Spreizbereichs 5 zum Durchmesser D_{S} des Spreizbereichs 5 von ungefähr 5.

### Bezuaszeichenliste

- 1: Spreizdübel
- 2, 2': Grundkörper
- 3: Hülle
- 4: Einführhülse
- 5: Spreizbereich
- 6: Hülse
- 7: Bund
- 8: erstes Hülsenteil
- 9: zweites Hülsenteil
- 10: Verbinder
- 11: erste Spreizzunge
- 12: zweite Spreizzunge
- 13: erster Schlitz
- 14: zweiter Schlitz
- 15: Spreizkanal
- 16: Schraubkanal
- 17: Schwächung
- 17a: innerer Teil der Schwächung 17
- 17b: äußerer Teil der Schwächung 17
- 18: Hüllkörper
- 19, 19': Rippe
- 20: Block
- 21: Hüllelement
- 22: Flügelelement
- 23: Ausnehmung
- 24: Öffnung
- 25: Mantelfläche des Spreizbereichs 5
- 26: hintere Verdrehsicherungsrippe
- 27: vordere Verdrehsicherungsrippe
- 28a: Scharnier einer Spreizzunge 11, 12
- 28b: Scharnier eines Hülsenteils 8, 9
- 29: hinteres Ende eines Flügelelements 22
- D_{F}: Außendurchmesser der Flügelelemente 22
- D_{S}: Außendurchmesser des Spreizbereichs 5
- E: Einbringrichtung
- L: Längsachse
- r₁: erste radiale Richtung
- r₂: zweite radiale Richtung
- s₁: erste Spreizrichtung
- s₂: zweite Spreizrichtung

## Patentansprüche

1. Spreizdübel (1), der aus mindestens zwei unterschiedlichen Kunststoffen besteht, mit einem Grundkörper (2, 2') aus dem ersten Kunststoff, der von einer Hülle (3) aus dem zweiten Kunststoff zumindest teilweise umhüllt ist, wobei der Grundkörper (2, 2') einen sich entlang einer Längsachse (L) erstreckenden Spreizbereich (5) mit mindestens zwei durch einen ersten Schlitz (13) voneinander getrennten Spreizzungen (11, 12) und eine in Einbringrichtung (E) vorn am Spreizdübel (1) angeordnete Hülse (6) aufweist, die mit dem Spreizbereich (5) verbunden ist und zumindest teilweise durch einen von der Hülle (3) gebildeten Hüllkörper (18) umhüllt ist,
**dadurch gekennzeichnet,**
**dass** an dem Hüllkörper (18) mindestens ein Flügelelement (22) angeordnet ist, das sich vom Hüllkörper (18) ausgehend entgegen der Einbringrichtung (E) und im Wesentlichen in Längsrichtung (L) kragarmförmig erstreckt.

2. Spreizdübel nach Anspruch 1, **dadurch gekennzeichnet, dass** an dem Hüllkörper (18) mehrere Flügelelemente (22) angeordnet sind, die an ihren hinteren Enden (29) nicht miteinander verbunden sind.

3. Spreizdübel nach Anspruch 2, **dadurch gekennzeichnet, dass** die Flügelelemente (22) ausschließlich durch den Hüllkörper (18) miteinander verbunden sind.

4. Spreizdübel nach einem der Ansprüche 1 bis 3, **dadurch gekennzeichnet, dass** mindestens ein Flügelelement (22) in einer im Spreizbereich (5) angeordneten Öffnung (24) einliegt.

5. Spreizdübel nach einem der Ansprüche 1 bis 4, **dadurch gekennzeichnet, dass** sich mindestens ein Flügelelement (22) über mindestens die gesamte Länge des Spreizbereichs (5) erstreckt.

6. Spreizdübel nach einem der Ansprüche 1 bis 5, **dadurch gekennzeichnet, dass** genau zwei Flügelelemente (22) zwischen genau zwei Spreizzungen (11, 12) angeordnet sind.

7. Spreizdübel nach einem der Ansprüche 1 bis 6, **dadurch gekennzeichnet, dass** mindestens ein Flügelelement (22) an seinem hinteren Ende (29) abgeschrägt ist.

8. Spreizdübel nach einem der Ansprüche 1 bis 7, **dadurch gekennzeichnet, dass** mindestens ein Flügelelement (22) in einem unverspreizten Zustand in radialer Richtung im Spreizbereich (5) über den Grundkörper (2, 2') übersteht.

9. Spreizdübel nach einem der Ansprüche 1 bis 8, **dadurch gekennzeichnet, dass** in der Hülse (6) ein zweiter Schlitz (14) angeordnet ist, der gegenüber dem ersten Schlitz (13) geneigt ist.

10. Spreizdübel nach einem der Ansprüche 1 bis 9, **dadurch gekennzeichnet, dass** der Spreizbereich (5) beim Einbringen eines Spreizelements im Wesentlichen in eine erste radiale Spreizrichtung (s₁) aufspreizt, während die Hülse (6) im Wesentlichen in eine davon abweichende zweite radiale Spreizrichtung (s₂) aufspreizt.

## Claims

1. Expansible fixing plug (1) which consists of at least two different plastics materials, having a main body (2, 2') made of the first plastics material, which is at least partly encased by a casing (3) made of the second plastics material, wherein the main body (2, 2') has an expansion region (5), which extends along a longitudinal axis (L) and has at least two expansion tongues (11, 12) which are separated from one another by a first slot (13), and a sleeve (6) arranged at the front of the expansible fixing plug (1) in the direction of introduction (E), which sleeve is connected to the expansion region (5) and is at least partly encased by a casing body (18) formed by the casing (3),
**characterised in that**
on the casing body (18) there is arranged at least one wing element (22) which, starting from the casing body (18), extends cantilever-like in a direction opposite to the direction of introduction (E) and substantially in the longitudinal direction (L).

2. Expansible fixing plug according to claim 1, **characterised in that** on the casing body (18) there are arranged a plurality of wing elements (22) which are not connected to one another at their rear ends (29).

3. Expansible fixing plug according to claim 2, **characterised in that** the wing elements (22) are connected to one another exclusively by the casing body (18).

4. Expansible fixing plug according to any one of claims 1 to 3, **characterised in that** at least one wing element (22) lies in an opening (24) arranged in the expansion region (5).

5. Expansible fixing plug according to any one of claims 1 to 4, **characterised in that** at least one wing element (22) extends over at least the entire length of the expansion region (5).

6. Expansible fixing plug according to any one of claims 1 to 5, **characterised in that** exactly two wing elements (22) are arranged between exactly two expansion tongues (11, 12).

7. Expansible fixing plug according to any one of claims 1 to 6, **characterised in that** at least one wing element (22) slopes at its rear end (29).

8. Expansible fixing plug according to any one of claims 1 to 7, **characterised in that** at least one wing element (22), in an unexpanded state, projects beyond the main body (2, 2') in the radial direction in the expansion region (5).

9. Expansible fixing plug according to any one of claims 1 to 8, **characterised in that** in the sleeve (6) there is arranged a second slot (14) which is inclined with respect to the first slot (13).

10. Expansible fixing plug according to any one of claims 1 to 9, **characterised in that,** on introduction of an expander element, the expansion region (5) expands substantially in a first radial expansion direction (s₁), while the sleeve (6) expands substantially in a second radial expansion direction (s₂) different therefrom.

## Revendications

1. Cheville à expansion (1), qui est constituée d'aux moins deux matières plastiques différentes, avec un corps de base (2, 2') constitué de la première matière plastique, qui est au moins partiellement enrobé par une gaine (3) constituée de la deuxième matière plastique, sachant que le corps de base (2, 2') présente une région d'expansion (5) s'étendant le long d'un axe longitudinal (L) et dotée d'au moins deux languettes d'expansion (11, 12) séparées l'une de l'autre par une première fente (13), et une douille (6) disposée à l'avant sur la cheville à expansion (1) dans un sens d'introduction (E), douille qui est reliée à la région d'expansion (5) et qui est enrobée au moins partiellement par un corps d'enrobage (18) formé par la gaine (3),
**caractérisée en ce qu'**au moins un élément formant ailette (22) est disposé sur le corps d'enrobage (18), élément qui, en partant du corps d'enrobage (18), s'étend en porte-à-faux à l'encontre du sens d'introduction (E) et essentiellement dans la direction longitudinale (L).

2. Cheville à expansion selon la revendication 1, **caractérisée en ce que** plusieurs éléments formant ailettes (22) sont disposés sur le corps d'enrobage (18), éléments qui ne sont pas reliés entre eux à leurs extrémités arrière (29).

3. Cheville à expansion selon la revendication 2, **caractérisée en ce que** les éléments formant ailettes (22) sont uniquement reliés entre eux par le corps d'enrobage (18).

4. Cheville à expansion selon l'une des revendications 1 à 3, **caractérisée en ce qu'**au moins un élément formant ailette (22) est logé dans une ouverture (24) disposée dans la région d'expansion (5).

5. Cheville à expansion selon l'une des revendications 1 à 4, **caractérisée en ce qu'**au moins un élément formant ailette (22) s'étend au moins sur toute la longueur de la région d'expansion (5).

6. Cheville à expansion selon l'une des revendications 1 à 5, **caractérisée en ce qu'**exactement deux éléments formant ailettes (22) sont disposés entre exactement deux languettes d'expansion (11, 12).

7. Cheville à expansion selon l'une des revendications 1 à 6, **caractérisée en ce qu'**au moins un élément formant ailette (22) est biseauté à son extrémité arrière (29).

8. Cheville à expansion selon l'une des revendications 1 à 7, **caractérisée en ce qu'**au moins un élément formant ailette (22), dans un état non expansé, dépasse en direction radiale du corps de base (2, 2') dans la région d'expansion (5).

9. Cheville à expansion selon l'une des revendications 1 à 8, **caractérisée en ce qu'**une deuxième fente (14), qui est inclinée par rapport à la première fente (13), est disposée dans la douille (6).

10. Cheville à expansion selon l'une des revendications 1 à 9, **caractérisée en ce que**, lors de l'introduction d'un élément d'expansion, la région d'expansion (5) s'ouvre par expansion essentiellement dans une première direction d'expansion radiale (s₁), tandis que la douille (6) s'ouvre par expansion essentiellement dans une deuxième direction d'expansion radiale (s₂) différente de la première.
